# EUROPEAN PATENT APPLICATION

(11) **EP 1 477 543 A1**
(43) Date of publication of application: **17.11.2004**
(21) Application number: 03701738.1
(22) Date of filing: 16.01.2003
(51) Int. Cl.: C09K 3/18, D06M 15/277, D06M 15/53

(54) **AQUEOUS WATER-AND-OIL REPELLANT DISPERSION**

(30) Priority: 21.01.2002 JP 2002011208
(71) Applicant: Daikin Industries, Ltd., Osaka-shi, Osaka 530-8323 (JP)
(72) Inventor: AGA, Tsukasa, Settsu-shi, Osaka 566-8585 (JP)
(74) Representative: HOFFMANN - EITLE
(86) International application number: PCT/JP2003/000303
(87) International publication number: WO 2003/062347

(57) **Abstract**

An aqueous water- and oil-repellent dispersion comprising:
(A) a fluorine-containing polymer, and
(B) a surfactant which comprises a cationic surfactant and a nonionic surfactant of the formula (I) :

   R¹O[CH₂CH(CH₃)O]ₐ-(CH₂CH₂O)_{b}H (I)
wherein R¹ is a branched alkyl or alkenyl group wherein a main chain has at least 5 carbon atoms and a side chain has
at least 3 carbon atoms,
a is an integer of at least 3, and
b is an integer of 10 to 30,
is not destroyed by mechanical impact and does not cause a fabric pollution.

## Description

### FIELD OF THE INVENTION

The present invention relates to an aqueous water- and oil-repellent dispersion. Particularly, it relates to an aqueous water- and oil-repellent dispersion in which a fluorine-containing polymer is dispersed in the presence of a cationic surfactant and a nonionic surfactant.

### RELATED ARTS

It is well known that a polymer of a polymerizable compound having a perfluoroalkyl or perfluoroalkenyl group and an acrylate or methacrylate group can be used as a water- and oil-repellent for a fibrous fabric. Particularly, an aqueous dispersion which is prepared by dispersing the polymer in an aqueous medium by means of an emulsifier is widely and industrially used.

However, in a water- and oil-repellent treatment bath which is prepared by diluting a conventional aqueous dispersion, a dispersion is destroyed by a mechanical impact which is applied when a substrate to be treated enters into the treatment bath or when the substrate emerges from the treatment bath, and then an aggregate of the polymer is generated. The conventional aqueous dispersion often has the trouble that the aggregate is attached to the substrate to give a substrate soil.

JP-A-2000-282016 and JP-A-2001-98033 disclose that RO[CH₂CH(CH₃)O]ₐ-(CH₂CH₂O)_{b}H is used as a nonionic surfactant for a water- and oil-repellent composition. These documents describe that R is a linear or branched alkyl or alkenyl group having at least 8 carbon atoms. However, when R is a linear alkyl group or R is a branched alkyl group having a side chain having at most 2 carbon atoms, impact resistance of the diluted liquid of the polymer dispersion is not high. Therefore, undesirable aggregates are disadvantageously generated to deteriorate the water- and oil-repellency.

### SUMMARY OF THE INVENTION

One of objects of the present invention is to provide an aqueous water- and oil-repellent dispersion wherein a diluted liquid of the aqueous dispersion is not destroyed by a mechanical impact exerted from a substrate (or a fabric) in a water- and oil-repellent treatment bath, whereby a substrate pollution is not caused.

Accordingly, water- and oil-repellency which is an inherent performance is not deteriorated so that excellent properties are obtained.

The present invention provides an aqueous water- and oil-repellent dispersion comprising:
(A) a homopolymer or copolymer comprising at least one polymerizable compound having a perfluoroalkyl or perfluoroalkenyl group and an acrylate or methacrylate group, or a copolymer comprising said polymerizable compound and another compound copolymerizable therewith, and
(B) a surfactant which comprises a cationic surfactant and a nonionic surfactant of the formula (I):

   R¹O[CH₂CH(CH₃)O]ₐ-(CH₂CH₂O)_{b}H (I)
wherein R¹ is a branched alkyl or alkenyl group in which a main chain has at least 5 carbon atoms and a side chain has at least 3 carbon atoms,
a is an integer of at least 3, and
b is an integer of 10 to 30.

A dilution liquid, which is obtained by diluting the aqueous water- and oil-repellent dispersion of the present invention with water and/or an organic solvent, is excellent in impact resistance.

The present invention also provides:
a method of processing a textile comprising using the aqueous water- and oil-repellent dispersion; and
a textile to which the aqueous water- and oil-repellent dispersion is applied.

### DETAILED EXPLANATION OF THE INVENTION

### [Polymer (A)]

The polymer (A) is a homopolymer or a copolymer.

In the copolymer, which is the polymer (A), comprising the polymerizable compound having the perfluoroalkyl or perfluoroalkenyl group and the acrylate or methacrylate group and the another compound copolymerizable therewith, the former compound is in the amount of at least 25 % by weight, preferably at least 40 % by weight based on the weight of the copolymer.

Examples of the polymerizable compound having the perfluoroalkyl or perfluoroalkenyl group and the acrylate or methacrylate group include (meth) acrylates represented by the formulas:

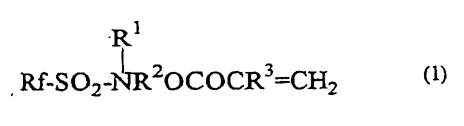

Rf-(CH₂)ₙOCOCR³=CH₂ (2)

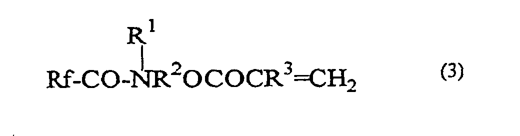

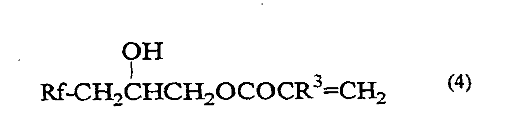

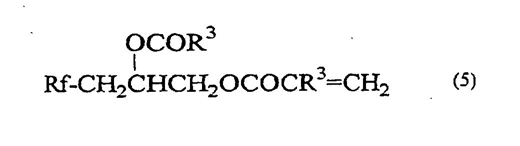

Rf-O-Ar-CH₂OCOCR³=CH₂ (6)

wherein Rf is a perfluoroalkyl or perfluoroalkenyl group having 3 to 21 carbon atoms,
R¹ is a hydrogen atom or an alkyl group having 1 to 10 carbon atoms,
R² is an alkylene group having 1 to 10 carbon atoms,
R³ is a hydrogen atom or a methyl group,
Ar is an aryl group which optionally has a substituent group, and
n is an integer of 1 to 10.

Specific examples of said polymerizable compound include:

CF₃(CF₂)₇(CH₂)OCOCH=CH₂,

CF₃(CF₂)₆(CH₂)OCOC (CH₃)=CH₂,

(CF₃)₂CF(CF₂)₆(CH₂)₂OCOCH=CH₂,

CF₃(CF₂)₇(CH₂)₂OCOC(CH₃)=CH₂,

CF₃(CF₂)7 (CH₂)₂OCOCH=CH₂,

CF₃(CF₂)₇SO₂N(CH₃)(CH₂)₂OCOCH=CH₂,

CF₃(CF₂)₇SO₂N(C₂H₅)(CH₂)₂OCOC(CH₃)=CH₂,

(CF₃)₂CF(CF₂)₆CH₂CH(OCOCH₃)CH₂OCOC(CH₃)=CH₂,

(CF₃)₂CF(CF₂)₆CH₂CH(OH) CH₂OCOCH=CH₂,

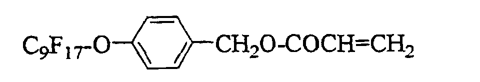

and

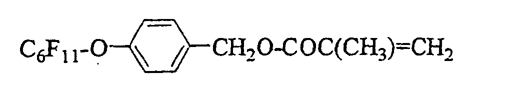

The another copolymerizable compounds are various. Examples of the another copolymerizable compound include: (1) acrylic acid and methacrylic acid, and methyl, ethyl, butyl, isobutyl, t-butyl, propyl, 2-ethylhexyl, hexyl, decyl, lauryl, stearyl, isobornyl, β-hydroxyethyl, glycidyl, phenyl, benzyl and 4-cyanophenyl esters thereof; (2) vinyl esters of fatty acids such as acetic acid, propionic acid, caprylic acid, lauric acid and stearic acid; (3) styrene compounds such as styrene, α-methylstyrene and p-methylstyrene; (4) vinyl halides and vinylidene compounds such as vinyl fluoride, vinyl chloride, vinyl bromide, vinylidene fluoride and vinylidene chloride; (5) fatty acid allyl esters such as allyl heptanoate, allyl caprylate and allyl caproate; (6) vinyl alkyl ketones such as vinyl methyl ketone and vinyl ethyl ketone; (7) acryl amides such as N-methylacrylamide and N-methylolmethacrylamide; and (8) dienes such as 2,3-dichloro-1,3-butadiene and isoprene.

### [Surfactant (B)]

The surfactant (B) comprises (B-1) a cationic surfactant and (B-2) a nonionic surfactant.

The cationic surfactant (B-1) includes dodecyl trimethyl ammonium acetate, trimethyl tetradecyl ammonium chloride, hexadecyl trimethyl ammonium bromide, trimethyl octadecyl ammonium chloride, behenyl trimethyl ammonium chloride, (dodecylmethylbenzyl) trimethyl ammonium chloride, didodecyl dimethyl ammonium chloride, dioctadecyl dimethyl ammonium chloride, benzyl dodecyl dimethyl ammonium chloride, benzyl tetradecyl dimethyl ammonium chloride, benzyl octadecyl dimethyl ammonium chloride, methyl dodecyl di(hydropolyoxyethylene) ammonium chloride, benzyl dodecyl di(hydropolyoxyethylene) ammonium chloride and N-[2-(diethylamino)ethyl]oleamide hydrochloride.

The nonionic surfactant (B-2) is a compound of the formula (I):

R¹O[CH₂CH(CH₃)O]ₐ-(CH₂CH₂O)_{b}H (I)

wherein R¹ is a branched alkyl or alkenyl group wherein a main chain has at least 5 carbon atoms and a side chain has at least 3 carbon atoms,
a is an integer of at least 3, and
b is an integer of 10 to 30.

In R¹ of the formula (I), preferably, the side chain is the alkyl group and the number of the side chains is at least 3, for example, at least 4. The side chain, which is the alkyl group, may be an alkyl group having 1 to 3 carbon atoms, particularly a methyl group. R¹ preferably has at least 10 carbon atoms. The upper limit of the carbon atom number of R¹ may be 50, for example, 30.

R¹ in the formula (I) is particularly preferably a C₁₃ isotridecyl group having 4 side-chain methyl groups, that is, CH₃CH(CH₃)CH₂CH(CH₃)CH₂CH(CH₃)CH₂CH(CH₃)CH₂-, or a C₁₃ isotridecyl group having 6 side-chain methyl groups, that is, CH₃C(CH₃)₂CH₂C(CH₃)₂CH₂C(CH₃) ₂CH₂-, or CH₂(CH₃)CH(CH₃)CH(CH₃)CH(CH₃)CH(CH₃)CH(CH₃)CH₂-, or a C₁₃ isotridecyl group having 3 side-chain ethyl groups, that is, CH₃CH(C₂H₅)CH₂CH(C₂H₅)CH₂CH(C₂H₅)CH₂-.

A usual nonionic surfactant (B-3) other than the nonionic surfactant (B-2) may be used as the nonionic surfactant.

Examples of the usual nonionic surfactant (B-3) include a condensate product of ethylene oxide with hexylphenol, isooctylphenol, hexadecanol, oleic acid, alkane(C₁₂₋₁₆) thiol, sorbitan monofatty acid(C₇₋₁₉) or alkyl(C₁₂₋₁₈) amine and the like.

The amount of the nonionic surfactant (B-3) is preferably at most 100 parts by weight, for example, at most 50 parts by weight, based on 100 parts by weight of the nonionic surfactant (B-2).

The weight ratio of the cationic surfactant (B-1) to the nonionic surfactants (B-2) and (B-3) may be from 0.5:9.5 to 5:5, for example, from 1:9 to 4:6.

The amount of the surfactant (B) may be from 3 to 30 parts by weight, for example, from 5 to 20 parts by weight, based on 100 parts by weight of the polymer (A).

### [Organic solvent]

The aqueous water- and oil-repellent dispersion of the present invention may contain or may not contain an organic solvent. Water-soluble organic solvents can be used as the organic solvent.

The dispersion according to the present invention can be prepared by emulsion-polymerizing the polymerizable compound(s) in water optionally accompanied by the organic solvent in the presence of the surfactant (B) to give an emulsion of the polymer (A). Water and/or surfactant may be added to the emulsion of the polymer (A) to give the aqueous water- and oil-repellent dispersion. The polymer concentration in the aqueous water- and oil-repellent dispersion is, for example, from 0.1 to 50 % by weight.

Examples of a suitable substrate, to which the dispersion according to the present invention is applied, include a film, a fiber, a yarn, a woven fabric, a carpet, a filament made from a natural polymer material, a modified natural polymer material and a synthetic polymer material, and a product made from a fiber or a yarn. The substrate is preferably a textile which is in the form of a fiber, a yarn or a fabric.

The dispersion according to the present invention can be applied to the substrate preferably by coating, dipping, spraying, padding, roll coating, or combination of these procedures. For example, a padding bath having the bath solid content of 0.1 to 10 % by weight can be used. The substrate is padded in the bath, and then excess liquid is usually removed by a squeezing roll to give the dry pickup amount (the weight of dry polymer on the substrate) of from 0.01 to 10 % by weight based on the weight of the substrate. Then, the treated substrate is preferably heated at 100-200 °C.

### PREFERRED EMBODIMENTS OF THE INVENTION

Examples and Comparative Examples are shown hereinafter to illustrate the present invention in detail.

Properties are determined as follows:

### Water- and oil-repellency

The polymer dispersion liquid is diluted with water to give a treatment liquid having a solid content of 0.08 % by weight. A polyester fabric is immersed in the treatment liquid, squeezed with a mangle to give a wet pickup of 65%, dried at 100°C for two minutes, heated at 160°C for one minute, and then subjected to an evaluation of water- and oil-repellency.

The water-repellency is expressed by the water repellency No. (cf. the following Table 1) determined by the spray method according to JIS (Japanese Industrial Standard) L-1092.

The oil-repellency is determined by dropping several drops of a test solution shown in the following Table 2 according to AATCC-TM118 on two positions of a surface of a test cloth and observing the penetration state of the drops after 30 seconds. The maximum point at which the test solution exhibits no penetration is expressed by the oil-repellency.

**Table 1**

| Water repellency No. | State |
|---|---|
| 5 | No wet on the surface |
| 4 | Slight wet on the surface |
| 3 | Partial wet on the surface |
| 2 | Wet on the surface |
| 1 | Wet over the whole surface |

**Table 2**

| Oil-repellency | Test solution | Surface tension (dyne/cm, 25°C) |
|---|---|---|
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | n-Hexadecane/Nujol mixture solution (35/65 by weight) | 29.6 |
| 1 | Nujol | 31.2 |
| 0 | Inferior to 1 | - |

### Mechanical stability

The aqueous dispersion is diluted with tap water to give a solid content of 0.2 % by weight. The diluted dispersion is stirred in a homomixer at 3,000 rpm for 10 minutes and generated scum is filtered with a black cotton fabric.
○: No scum generated
Δ: Slight scum generated
×: Much scum generated

### Chemical stability

The aqueous dispersion is diluted with tap water to give a solid content of 0.6 % by weight. 0.03 % by weight of a fixing agent for nylon is added to the diluted dispersion and intimately stirred. The generation of agglomerate is observed.
○: No agglomerate generated
Δ: Slight agglomerate generated
×: Much agglomerate generated

### Storage stability

After the aqueous dispersion (solid content: 30 % by weight) is stored at 40°C for one month, the generation of precipitate is observed.
○: No precipitation
Δ: Slight precipitation
×: Much precipitation

### Example 1

100 g of CₙF₂ₙ₊₁CH₂CH₂OCOCH=CH₂ (n is 6, 8, 10, 12 and 14 (average of n is 8)) (FA), 45 g of stearyl acrylate (StA), 5 g of N-methylol acrylamide (N-MAM), 3 g of trimethyloctadecyl ammonium chloride (TMOAC), 12 g of polyoxypropylene polyoxyethylene isotridecyl ether (POPPOE-ITDE), 40 g of tripropylene glycol (TPG) and 200 g of pure water were stirred at 60°C for 15 minutes.

Then, with maintaining the temperature at 50°C to 60°C, the mixture was emulsified by a high pressure emulsifier manufactured by Gaulin, Inc. (throughput: 0.4 L/min.) at 400 kg/cm² for 10 minutes.

The mixture was transferred to a 1 L autoclave, the atmosphere of the autoclave was replaced with nitrogen and 0.75 g of V-50 was added to the mixture. The polymerization was performed with stirring at 60°C for 5 hours to give an aqueous water- and oil-repellent dispersion.

The water- and oil-repellency, the mechanical stability and the chemical stability of the aqueous water- and oil-repellent dispersion were evaluated. The results are shown in Table B.

### Example 2

The same procedure as in Example 1 was repeated except that the type of the monomer, the type of the cationic surfactant, the type of the nonionic surfactant and the type and amount of the organic solvent were changed as shown in Table A. The results are shown in Table B.

### Example 3

100 g of FA, 7 g of 2-ethylhexyl methacrylate (2EHMA), 3 g of N-MAM, 5 g of benzyl octadecyl dimethyl ammonium chloride (BODMAC), 10 g POPPOE-ITDE, 30 g of dipropylene glycol monomethyl ether (DPGMME) and 200 g of pure water were stirred at 60°C for 15 minutes.

Then, with maintaining the temperature at 50°C to 60°C, the mixture was emulsified by a high pressure emulsifier manufactured by Gaulin, Inc. (throughput: 0.4 L/min.) at 400 kg/cm² for 10 minutes.

The mixture was transferred to a 1 L autoclave, 40 g of VCl was added, and 0.75 g of V-50 was added to the mixture after N₂ replacement. The polymerization was performed at 60°C for 10 hours with stirring to give an aqueous water- and oil-repellent dispersion.

The water- and oil-repellency, the mechanical stability and the chemical stability of the aqueous water- and oil-repellent dispersion were evaluated. The results are shown in Table B.

### Example 4

The same procedure as in Example 3 was repeated except that the type of the monomer, the type of the cationic surfactant, the type of the nonionic surfactant and the type and amount of the organic solvent were changed as shown in Table A. The results are shown in Table B.

### Comparative Example 1

The same procedure as in Example 1 was repeated except that polyoxyethylene lauryl ether (POE-LE) was used instead of POPPOE-ITDE.

### Comparative Example 2

The same procedure as in Example 1 was repeated except that TMOAC was not used.

### Comparative Example 3

The same procedure as in Example 3 was repeated except that polyoxyethylene sorbitan monooleate (POE-SMO) was used instead of POPPOE-ITDE.

### Comparative Example 4

The same procedure as in Example 3 was repeated except that polyoxypropylene polyoxyethylene cetyl ether (POPPOE-CE) was used instead of POPPOE-ITDE.

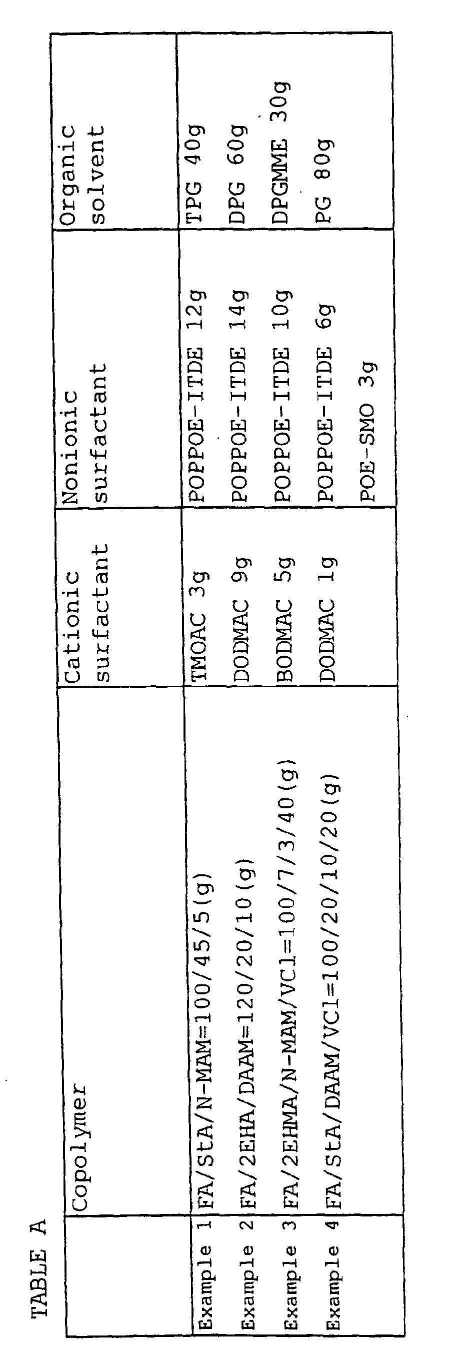

The abbreviations shown in Examples indicate the following compounds.
FA: CₙF₂ₙ₊₁CH₂CH₂OCOCH=CH₂ (n = 6,8,10,12,14; Average is 8)
StA: Stearyl acrylate
2EHA: 2-Ethylhexyl acrylate
2EHMA: 2-Ethylhexyl methacrylate
VCl: Vinyl chloride
N-MAM: N-Methylol acrylamide
DAAM: Diacetone acrylamide
TMOAC: Trimethyl octadecyl ammonium chloride
DODMAC: Dioctadecyl dimethyl ammonium chloride
BODMAC: Benzyl octadecyl dimethyl ammonium chloride
POPPOE-ITDE: Polyoxypropylene polyoxyethylene isotridecyl ether
POE-LE: Polyoxyethylene lauryl ether
POE-SMO: Polyoxyethylene sorbitan monooleate
POPPOE-CE: Polyoxypropylene polyoxyethylene cetyl ether
TPG: Tripropylene glycol
DPG: Dipropylene glycol
DPGMME: Dipropylene glycol monomethyl ether
PG: Propylene glycol
V-50: Azobisamidinopropane dihydrochloride

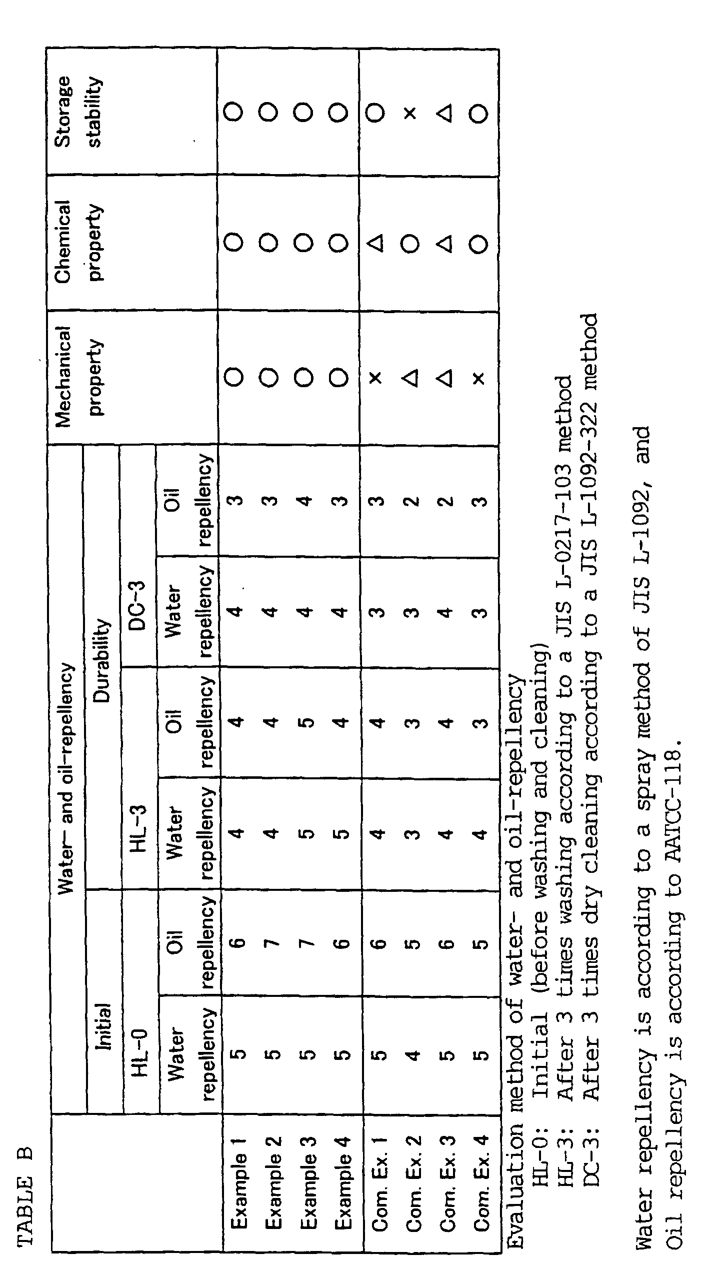

## Claims

1. An aqueous water- and oil-repellent dispersion comprising:
(A) a homopolymer or copolymer comprising at least one polymerizable compound having a perfluoroalkyl or perfluoroalkenyl group and an acrylate or methacrylate group, or a copolymer comprising said polymerizable compound and another compound copolymerizable therewith, and
(B) a surfactant which comprises a cationic surfactant and a nonionic surfactant of the formula (I):
R¹O[CH₂CH(CH₃)O]ₐ-(CH₂CH₂O)_{b}H (I)
wherein R¹ is a branched alkyl or alkenyl group wherein a main chain has at least 5 carbon atoms and a side chain has at least 3 carbon atoms,
a is an integer of at least 3, and
b is an integer of 10 to 30.

2. The dispersion according to claim 1, wherein, in R¹ of the formula (I), the side chain is an alkyl group and the number of the side chains is at least 3.

3. The dispersion according to claim 1, wherein R¹ in the formula (I) has at least 10 carbon atoms.

4. The dispersion according to claim 1, wherein, in R¹ of the formula (I), the side chain is an alkyl group having 1 to 3 carbon atoms.

5. The dispersion according to claim 1, wherein, in R¹ of the formula (I), the side chain is a methyl group.

6. The dispersion according to claim 1, wherein R¹ in the formula (I) is a C₁₃ isotridecyl group having 4 side-chain methyl groups, that is, CH₃CH(CH₃)CH₂CH(CH₃)CH₂CH(CH₃)CH₂CH(CH₃)CH₂-.

7. The dispersion according to claim 1, wherein R¹ in the formula (I) is a C₁₃ isotridecyl group having 6 side-chain methyl groups, that is, CH₃C(CH₃)₂CH₂C(CH₃)₂CH₂C(CH₃)₂CH₂-, or CH₂(CH₃)CH(CH₃)CH(CH₃)CH(CH₃)CH(CH₃)CH(CH₃)CH₂-.

8. The dispersion according to claim 1, wherein R¹ in the formula (I) is a C₁₃ isotridecyl group having 3 side-chain ethyl groups, that is, CH₃CH(C₂H₅)CH₂CH(C₂H₅)CH₂CH(C₂H₅)CH₂-.

9. A method of processing a textile, comprising using the dispersion according to claim 1.

10. A textile, to which the dispersion according to claim 1 is applied.
